# EUROPÄISCHE PATENTANMELDUNG

(11) **EP 3 995 279 A1**
(43) Veröffentlichungstag der Anmeldung: **11.05.2022**
(21) Anmeldenummer: 20206012.5
(22) Anmeldetag: 05.11.2020
(51) Int. Cl.: B29B 17/02

(54) **VERFAHREN UND VORRICHTUNG ZUM RECYCLEN EINES MEHRERE LAGEN UMFASSENDEN VERBUNDWERKSTOFFES**

(71) Anmelder: Fraunhofer-Gesellschaft zur Förderung der angewandten Forschung e.V., 80686 München (DE)
(72) Erfinder: IMBERT, Mathieu, 79104 Freiburg (DE); HAHN, Philipp, 79104 Freiburg (DE)
(74) Vertreter: 2SPL Patentanwälte PartG mbB

(57) **Zusammenfassung**

Ein Beispiel eines Verfahrens und einer Vorrichtung zum Recyclen eines mehrere Lagen umfassenden Verbundwerkstoffes umfasst. Das Verfahren umfasst Erzeugen zumindest einer Rissinitiierungsstelle an einer Oberfläche des Verbundwerkstoffes. Hierbei umfasst eine Tiefe der Rissinitiierungsstelle wenigstens eine Lage. Das Verfahren umfasst weiterhin Erzeugen eines Risses zwischen zwei Lagen des Verbundwerkstoffes ausgehend von der Rissinitiierungsstelle. Das Verfahren umfasst weiterhin Vergrößern des Risses mittels einer Krafteinwirkung, um zumindest eine Lage des Verbundwerkstoffes von anderen Lagen des Verbundwerkstoffes zu separieren.

## Beschreibung

### Technisches Gebiet

Die vorliegende Offenbarung befasst sich mit Verfahren und Vorrichtungen zum Recyclen von mehreren Lagen umfassenden Verbundwerkstoffen.

### Hintergrund

Verbundwerkstoffe, Faserverbundwerkstoffe oder Composites sind Kunststoffe, die mit mehreren Verstärkungslagen oder Lagen verstärkt sind und lange oder kontinuierliche Fasern aufweisen. Die bis heute wissenschaftlich untersuchten und industriell eingesetzten Recyclingverfahren für Composites können in zwei Kategorien eingeordnet werden: chemische Behandlungen und mechanischen Behandlungen. Das Ziel der chemischen Behandlung ist eine Matrix des Composites von Fasern des Composites zu trennen. Dies kann jedoch zu einem Verlust einer Faserausrichtung führen, die eine Ursache von mechanischen Eigenschaften der Composites sein kann. Bei der mechanischen Behandlung geht es darum, Bauteile oder ein Composite-Verschnittmaterial zu fragmentieren. Aus zu recycelndem Material kann bei der mechanischen Behandlung ein verstärkter Kunststoff mit kurzen Fasern erhalten werden. Dies kann zu einem Verlust der Länge der kontinuierlichen Fasern führen, welches zu einer deutlichen Reduzierung der erreichbaren mechanischen Eigenschaften der Bauteile der 2. Generation bei der mechanischen Behandlung führen kann. Somit können mit den aktuellen chemischen und mechanischen Recyclingmethoden für Composites die mechanischen Eigenschaften des Materials von einer Bauteilgeneration zur nächsten nicht erhalten werden.

### Zusammenfassung

Vor diesem Hintergrund besteht daher ein Bedarf ein Verfahren sowie eine Vorrichtung zum Recyclen bereitzustellen, die ein Recyclen von Verbundwerkstoffen ermöglichen, bei dem mechanische Eigenschaften des Verbundwerkstoffs, wie eine Faserlänge und -ausrichtung des Verbundwerkstoffs, im Wesentlichen beibehalten werden können. Diesem Bedarf kommen die Gegenstände der anhängigen unabhängigen Ansprüche nach. Ausführungsbeispiele schaffen ein Verfahren zum Recyclen eines mehrere Lagen umfassenden Verbundwerkstoffes. Bei dem Verfahren wird zumindest eine Rissinitiierungsstelle an einer Oberfläche des Verbundwerkstoffes erzeugt. Hierbei umfasst eine Tiefe der Rissinitiierungsstelle wenigstens eine Lage. Bei dem Verfahren wird weiterhin ein Riss zwischen zwei Lagen des Verbundwerkstoffes ausgehend von der Rissinitiierungsstelle erzeugt. Bei dem Verfahren wird weiterhin der Riss mittels einer Krafteinwirkung vergrößert, um zumindest eine Lage des Verbundwerkstoffes von anderen Lagen des Verbundwerkstoffes zu separieren.

Hierdurch kann ein minimalschädigendes Recyclingverfahren angeboten werden, das einen Eigenschaftenverlust des Materials oder des Verbundwerkstoffs minimieren kann. Dieses Verfahren kann eine multi-lagige Struktur der Composites ausnutzen und es durch den Einsatz von mechanischen Belastungen ermöglichen, die Lagen voneinander zu trennen. Die rückgewonnen Lagen können hierbei ihre Faserlänge und -ausrichtung beibehalten. Auf diese Weise können die Eigenschaften von dem Recyclingmaterial erhalten bleiben und ein neues Bauteil aus dem Recyclingmaterial schnell und einfach hergestellt werden.

Ausführungsbeispiele schaffen weiterhin eine Vorrichtung zum Recyclen eines mehrere Lagen umfassenden Verbundwerkstoffes. Die Vorrichtung umfasst eine Einrichtung zum Erzeugen eines Risses zwischen zwei Lagen des Verbundwerkstoffes ausgehend von zumindest einer Rissinitiierungsstelle.

### Figurenkurz beschreibung

Einige Beispiele von Vorrichtungen und/oder Verfahren werden nachfolgend bezugnehmend auf die beiliegenden Figuren lediglich beispielhaft näher erläutert. Es zeigen:
Fig. 1 ein Ablaufdiagramm eines Ausführungsbeispiels eines Verfahrens zum Recyclen eines mehrere Lagen umfassenden Verbundwerkstoffes;
Fig. 2 eine schematische Darstellung eines Ausführungsbeispiels eines mehrere Lagen umfassenden Verbundwerkstoffes;
Fig. 3 eine schematische Darstellung eines Ausführungsbeispiels des Verbundwerkstoffes nach einem Einbringen einer Rissinitiierungsstelle;
Fig. 4 eine schematische Darstellung eines Ausführungsbeispiels einer Vorrichtung zum Recyclen eines mehrere Lagen umfassenden Verbundwerkstoffes;
Fig. 5 eine schematische Darstellung eines Ausführungsbeispiels einer weiteren Vorrichtung zum Recyclen eines mehrere Lagen umfassenden Verbundwerkstoffes;
Fig. 6 eine schematische Darstellung eines Ausführungsbeispiels einer weiteren Vorrichtung zum Recyclen eines mehrere Lagen umfassenden Verbundwerkstoffes;
Fig. 7 eine schematische Darstellung eines Ausführungsbeispiels einer weiteren Vorrichtung zum Recyclen eines mehrere Lagen umfassenden Verbundwerkstoffes;
Fig. 8 eine schematische Darstellung eines Ausführungsbeispiels einer weiteren Vorrichtung zum Recyclen eines mehrere Lagen umfassenden Verbundwerkstoffes; und
Fig. 9 eine schematische Darstellung eines Ausführungsbeispiels einer weiteren Vorrichtung zum Recyclen eines mehrere Lagen umfassenden Verbundwerkstoffes.

### Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

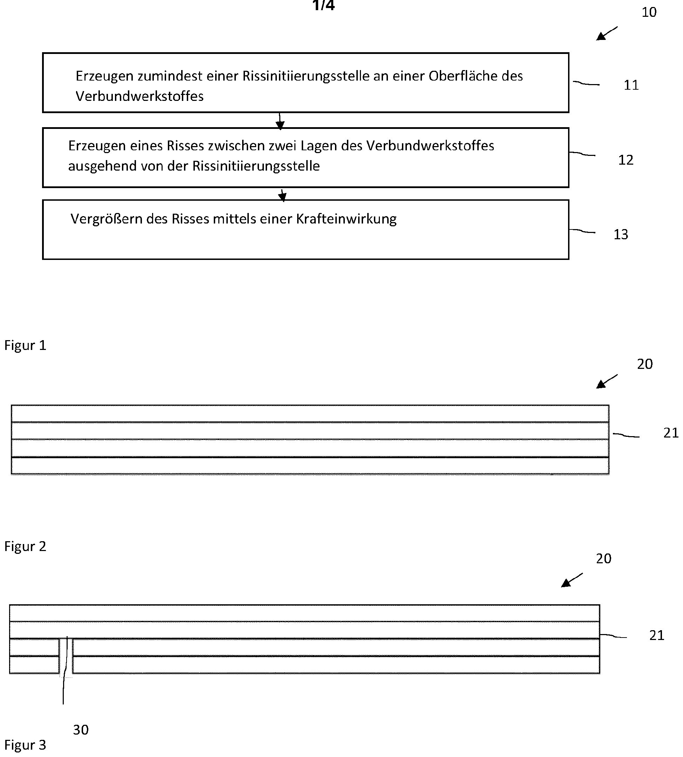

Fig. 1 zeigt ein Ablaufdiagram eines Ausführungsbeispiels eines Verfahrens 10 zum Recyclen eines mehrere Lagen umfassenden Verbundwerkstoffes. Verbundwerkstoffe oder Kompositwerkstoff (engl. composite) sind Werkstoffe aus zwei oder mehr verbundenen Materialien, der andere Werkstoffeigenschaften besitzt als seine einzelnen Komponenten. Die Verbindung erfolgt durch Stoff- oder Formschluss oder eine Kombination von beidem.

Beispielsweise kann ein Faserverbundwerkstoff als Verbundwerkstoff in diesem Verfahren 10 verwendet werden. Der Faserverbundwerkstoff ist ein Verbundwerkstoff, ein Mehrphasen- oder Mischwerkstoff, der im Allgemeinen aus zwei Hauptkomponenten besteht: aus den verstärkenden Fasern sowie einer Matrix (dem Füll- und Klebstoff zwischen den Fasern). Durch gegenseitige Wechselwirkungen der beiden Komponenten erhält der Gesamtwerkstoff höherwertige Eigenschaften als jede der beiden beteiligten Komponenten allein. Durch seine Matrix ermöglicht der Faserverbundwerkstoff ein einfaches und zuverlässiges Separieren von zumindest einer Lage des Faserverbundwerkstoffes von anderen Lagen des Faserverbundwerkstoffes.

Das Verfahren 10 umfasst ein Erzeugen 11 zumindest einer Rissinitiierungsstelle an einer Oberfläche des Verbundwerkstoffes in einem ersten Schritt oder einer ersten Etappe. Hierbei können eine oder mehrere Rissinitiierungsstellen in ein Bauteil oder den Verbundwerkstoff eingebracht werden, um das Bauteil oder den Verbundwerkstoff auf eine Lagentrennung des Bauteils oder des Verbundwerkstoffs vorzubereiten. Das Verfahren 10 umfasst weiterhin ein Erzeugen 12 eines Risses zwischen zwei Lagen des Verbundwerkstoffes ausgehend von der Rissinitiierungsstelle in einem zweiten Schritt oder zweiten Etappe. Ferner umfasst das Verfahren 10 ein Vergrößern 13 des Risses mittels einer Krafteinwirkung, um zumindest eine Lage des Verbundwerkstoffes von anderen Lagen des Verbundwerkstoffes zu separieren. Das Vergrößern 13 des Risses kann zusammen mit dem Erzeugen 12 des Risses in dem zweiten Schritt erfolgen kombiniert werden, so dass ausgehend von der Rissinitiierungsstelle 30 der Riss durch das ganze Bauteil oder den ganzen Verbundwerkstoff, ohne anzuhalten erweitert wird. Alternativ kann das Vergrößern 13 des Risses in einem separaten dritten Schritte oder einer separaten dritten Etappe erfolgen.

In Fig. 2 ist eine schematische Darstellung eines Ausführungsbeispiels eines mehrere Lagen 21 oder Einzellagen umfassenden Verbundwerkstoffes 20 oder Composite-Bauteils als Ausgangsmaterials gezeigt. Der in Fig. 2 abgebildete Verbundwerkstoff 20 umfasst beispielhaft vier Lagen 21.

Weiterhin zeigt Fig. 3 eine schematische Darstellung eines Ausführungsbeispiels des Verbundwerkstoffes 20 oder Bauteils nach einem Einbringen einer Rissinitiierungsstelle 30. Die Rissinitiierungsstelle 30 kann beispielsweise als Kerbe, Nut oder Rille ausgebildet sein. Hierdurch kann leicht und zuverlässig ein Riss zwischen zwei Lagen 21 des Verbundwerkstoffes 20 ausgehend von der Rissinitiierungsstelle erzeugt werden. Die Rissinitiierungsstelle 30 kann beispielsweise durch Fräsen, Sägen, Erosion, Lasergravierung, Schockwellen oder Laser Schock erzeugt werden. Bei der Erosion oder Elektroerosion wird ein elektrisch leitender Verbundwerkstoff 20 in einem Dielektrikum oder nicht-leitenden Flüssigkeit bearbeitet. Dazu wird ein ebenfalls elektrisch leitendes Werkzeug in die Nähe des Verbundwerkstoffs 20 gebracht, welches gegenüber dem Werkstück eine negative elektrische Spannung hat. Dadurch kommt es zu zahlreichen kleinen Entladungen zwischen Werkzeug und Verbundwerkstoff 20. Dies kann zu immer wiederkehrenden Funken führen, die vorrangig vom Verbundwerkstoff 20 Material abtragen und damit die Rissinitiierungsstelle 30 erzeugen. Bei der Lasergravierung wird ein Laserstrahl verwendet, um Material auf der Oberfläche des Verbundwerkstoffs 20 abzutragen und die Rissinitiierungsstelle 30 zu erzeugen. Beim Laserschock wird der Verbundwerkstoff 20 mit einem Laserpuls bestrahlt. Dieser Laserpuls generiert ein Plasma, das expandiert und eine Stoßwelle im Verbundwerkstoff 20 generiert. Die Stoßwelle ruft eine Lagentrennung des Verbundwerkstoffs 20 hervor und erzeugt damit die Rissinitiierungsstelle 30. Dies kann ein schnelles und zuverlässiges Erzeugen der Rissinitiierungsstelle 30 ermöglichen. Die Rissinitiierungsstelle 30 wird durch die Bauteiloberfläche oder Oberfläche des Verbundwerkstoffs eingebracht und kann senkrecht oder winklig beispielsweise mit einem Winkel von zumindest 10°, zumindest 20°, zumindest 30 °, zumindest 40°, zumindest 45°, zumindest 50°, und/oder einem Winkel von höchstens 50°, höchstens 60°, höchstens 70°, höchstens 80 °, höchstens 90° zur Bauteiloberfläche angeordnet sein. Die Tiefe der Rissinitiierungsstelle 30 bestimmt die Anzahl der Lagen 21, die in einem folgenden Schritt separiert werden. Die in Fig. 3 abgebildete Rissinitiierungsstelle 30 umfasst lediglich beispielhaft die Tiefe von zwei Lagen 21. Die Tiefe der Rissinitiierungsstelle 30 umfasst jedoch wenigstens eine Lage 21. Hierdurch kann wahlweise zumindest eine Lage 21 des Verbundwerkstoffs 20 leicht und zuverlässig von anderen Lagen 21 des Verbundwerkstoffs 20 separiert werden. Ferner kann die Tiefe der Rissinitiierungsstelle 30 mehrere Lagen 21 des Verbundwerkstoffes 20 umfassen. Auf diese Weise können mehrere Lagen 21 des Verbundwerkstoffs 20 zusammen von zumindest einer anderen Lage 21 des Verbundwerkstoffes 20 separiert werden.

Der Riss und/oder das Vergrößern 13 des Risses kann mittels einer Krafteinwirkung außerhalb einer Erstreckungsebene der Lagen 21 des Verbundwerkstoffes 20 und/oder Scherkräften, auch Mode I-Mode II mixed-Mode Belastung genannt, erzeugt werden. Bei der Scherkraft handelt es sich um eine auf eine Fläche wirkende Kraft, deren Richtungsvektor parallel zu dieser Fläche liegt. Dies kann ein einfaches und zuverlässiges Separieren von zumindest einer Lage 21 des Verbundwerkstoffes 20 von anderen Lagen 21 des Verbundwerkstoffes 20 ermöglichen. Der Riss und/oder das Vergrößern 13 des Risses kann durch eine quasi-statische oder dynamische Krafteinwirkung erzeugt werden. Auf diese Weise kann zumindest einer Lage 21 des Verbundwerkstoffes 20 von anderen Lagen 21 des Verbundwerkstoffes 20 schnell und zuverlässig separiert werden. Der Riss kann mittels Einklemmens bzw. Einspannens des Verbundwerkstoffes erzeugt und/oder vergrößert werden. Der Riss kann weiterhin mittels Abstützens des Verbundwerkstoffes erzeugt und/oder vergrößert werden. Der Riss kann weiterhin mittels temporär formschlüssig oder stoffschlüssig verbundener Systeme erzeugt und/oder vergrößert werden. Der Riss kann weiterhin mittels Ansaugens des Verbundwerkstoffes erzeugt und/oder vergrößert werden. Hierdurch kann der Riss schnell und zuverlässig ausgehend von der Rissinitiierungsstelle 30 erzeugt und/oder vergrößert werden. Der Riss wird in der dritten Etappe mit Hilfe von einer mechanischen Eröffnung durch das ganze Bauteil verbreitert 13. Diese mechanische Eröffnung kann zum Beispiel durch den Einsatz eines Keils erzeugt werden, der in dem Rissspalt vorangeschoben werden kann. Dabei können Greifsysteme an Rissränder und an einer anderen Seite des Bauteil benutzt werden, um Spannung in den zu separierenden Lagen 21 zu generieren. Eine andere Möglichkeit kann darin bestehen, eine relative Bewegung zweier Seiten des initiierten Risses durch die Benutzung von Greifsystemen oder Klemmeinheiten und/oder Saugsystemen oder Saugeinheiten in Mode I oder Mode II zu realisieren. Weiterhin können Rollen, Krümmungskontrolleinheiten oder ähnliche Systeme zur Kontrolle der Krümmung getrennter Lagen eingesetzt werden. Das Verfahren kann eine sich wiederholende mechanische Lagentrennungen umfassen. Diese Lagentrennung kann darin bestehen einen Riss zwischen zwei Verstärkungslagen oder Lagen 21 eines konsolidierten Composite mechanisch bis zur Separation der Lagen 21 wachsen zu lassen.

Mit diesem Verfahren 10 können durch mechanischen Bearbeitungsetappen die Lagen 21 eines Composite 20 voneinander getrennt werden. Diese Lagentrennung an Composites kann ohne spezifische eingebaute Lagentrennsysteme realisiert werden. Hierdurch kann das Recycling von einer großen Vielfalt an Composites ermöglicht werden. Die mechanisch aufgebrachten Belastungen in dem Verfahren 10 können zusätzlich eine Automatisierung des Prozesses erlauben, welche die Taktzeiten und somit die Kosten des Recyclingverfahren reduzieren können. In einigen Fällen kann dieses Verfahren 10 bei Raumtemperatur realisiert werden, was zu einem minimalen Energieeinsatz bei dem Recyclingverfahren führen kann.

Die Etappe 2, das Erzeugen 12 des Risses, und gegebenenfalls die Etappe 3, das Vergrößern 13 des Risses, können bei beliebigen Temperaturen (beispielsweise Raumtemperatur, mit Wärmezufuhr oder in abgekühlten Bedingungen) durchgeführt werden. Das Verfahren 10 oder die Methode zur Rückgewinnung von Einzellagen 21 eines Composites umfasst auch thermomechanischer Verfahren. Für Composites mit einer duroplastischer Matrix kann diese Lagentrennung von Vorteil sein, um den Energieeinsatz bei einer Fasermatrix-Trennung zu reduzieren. Auf der anderen Seite können für Composites bestehend aus einer thermoplastischen Matrix die Lagen 21 wieder benutzt werden, um neue Bauteile herzustellen.

Mit dem Verfahren 10 können mehrere Rissinitiierungsstellen 30 in einem Verbundwerkstoff 20 erzeugt werden. Diese Rissinitiierungsstellen 30 können zwischen mehreren oder allen Lagen 21 unmittelbar hintereinander vor dem Übergang zu dem zweiten Schritt, in dem ein oder mehrere Risse zwischen zwei Lagen 21 des Verbundwerkstoffes 20 ausgehend von den Rissinitiierungsstellen 30 erzeugt werden, generiert werden. Der zweite und der dritte Schritt können dann nach dem ersten Schritt ebenfalls jeweils unmittelbar hintereinander an mehreren Rissinitiierungsstellen 30 durchgeführt werden. Auf diese Weise können schnell mehrere Lagen 21 voneinander separiert werden. Alternativ kann zunächst in dem ersten Schritt eine erste Rissinitiierungsstelle 30 erzeugt werden. Im Folgenden kann im zweiten Schritt ein erster Riss ausgehend von der ersten Rissinitiierungsstelle 30 erzeugt werden. Des Weiteren kann dieser erste Riss in einem dritten Schritt vergrößert werden. In diesem Fall wird nur die eine Rissinitiierungsstelle 30 generiert, die für eine insbesondere unmittelbar darauffolgende Lagentrennung benötigt wird und erst nach der Lagentrennung wird eine neue oder weitere Rissinitiierungsstelle 30 generiert. Im Folgenden kann der erste bis dritte Schritte an der weiteren Rissinitiierungsstelle 30 durchgeführt werden. Diese Reihenfolge kann sich im Folgenden wiederholen.

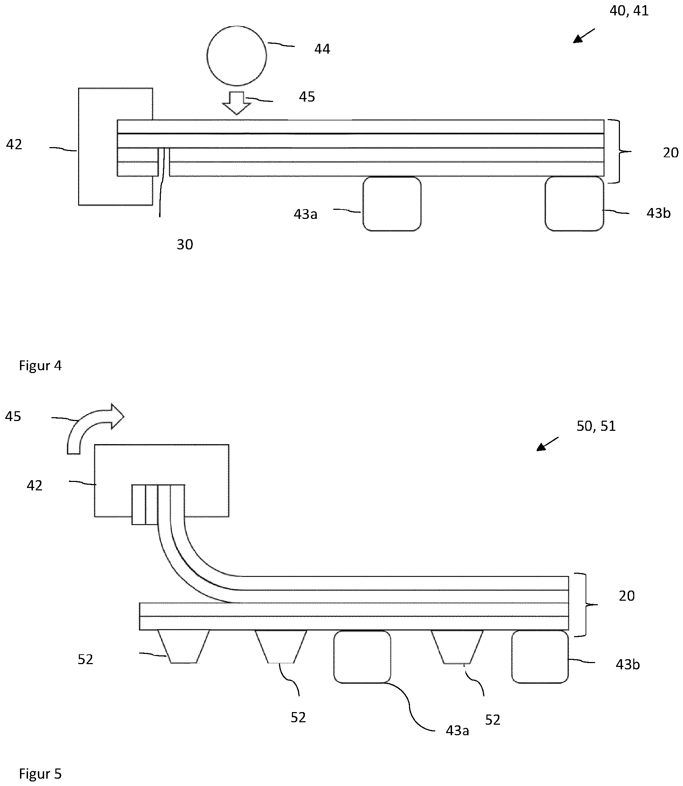

Fig. 4 zeigt eine schematische Darstellung eines Ausführungsbeispiels einer Vorrichtung 40 zum Recyclen eines mehrere Lagen 21 umfassenden Verbundwerkstoffes 20. Mit der in Fig. 4 gezeigten Konfiguration einer Vorrichtung 40 kann der zweite Schritt beziehungsweise das Erzeugen 12 des Risses durchgeführt werden. Die Vorrichtung 40 umfasst eine Einrichtung 41 zum Erzeugen eines Risses zwischen zwei Lagen 21 des Verbundwerkstoffes 20 ausgehend von zumindest einer Rissinitiierungsstelle 30. Die Einrichtung 41 zum Erzeugen des Risses kann eine Klemmeinheit bzw. ein Klemmsystem 42, eine Stützeinheit 43 oder Stützsystem 43, das zwei Stützen 43a, 43b umfassen kann, und einen Gegenstand 44 zur Einbringung einer Belastung oder Krafteinwirkung 45 umfassen. Auf diese Weise kann schnell und zuverlässig ein Riss ausgehend von der Rissinitiierungsstelle 30 erzeugt werden. Die Klemmeinheit bzw. Spannmittel 42 kann den Verbundwerkstoff 20, insbesondere zu lösende Lagen 21, an einer Seite einklemmen (hier beispielhaft links). An einer gegenüberliegenden Seite (hier beispielhaft rechts) kann der Verbundwerkstoff 20 von der Stützeinheit 43 von unten abgestützt werden. Hierbei kann sich die Rissinitiierungsstelle 30 außerhalb des Klemmsystems 42 zwischen Klemmsystem 42 und Stützeinheit 43 befinden. Eine der Klemmeinheit 42 gegenüberliegende oder andere Seite des Bauteils oder Verbundwerkstoffs 20 kann auf dem Stützeinheit 43 aufliegen. Der Gegenstand 44 kann die Krafteinwirkung 45 von einer der Stützeinheit 43 gegenüberliegenden Seite (hier: von oben) auf eine Fläche des Verbundwerkstoffs 20, die sich zwischen dem Klemmsystem 42 und der Stützeinheit 43 befindet, einbringen. Mit der Vorrichtung 40 kann beispielsweise eine mixed-Mode Belastung erzeugt werden. Für den Fall, dass die Rissinitiierungsstelle 30 senkrecht zur Bauteiloberfläche verläuft, kann die mixed-Mode Belastung darin bestehen, dass der Verbundwerkstoff 20 oder eine Probe an einer an die Rissinitiierungsstelle 30 angrenzenden Seite eingeklemmt wird und die quasi-statische oder dynamische Belastung in Form einer Krafteinwirkung oder von einem Impakt von dem Gegenstand 44 zwischen der Rissinitiierungsstelle 30 und dem Stützsystem 43 eigebracht werden kann. Dadurch kann der Riss ausgehend von an der Rissinitiierungsstelle 30 erzeugt 12 werden.

Das Vergrößern 13 des Risses kann in einer dritten Etappe beispielsweise mit einer in den Figuren 5, 6, 7 und 8 dargestellten Vorrichtungen 50, 60, 70, 80, 90 zum Recyclen eines mehrere Lagen 21 umfassenden Verbundwerkstoffes 20 durchgeführt werden. Die Vorrichtung 50, 60, 70, 80, 90 kann eine Einrichtung 51, 61, 71, 81, 91 zum Vergrößern des Risses mittels einer Krafteinwirkung umfassen, um damit zwei Lagen 21 des Verbundwerkstoffes 20 voneinander zu separieren. Auf diese Weise kann der Riss in einem zweiten Schritt einfach und zuverlässig vergrößert werden. Hierbei kann die Einrichtung 41, 91 zum Erzeugen des Risses und/oder die Einrichtung 51, 61, 71, 81, 91 zum Vergrößern des Risses zumindest eine Klemmeinheit 42 zum Einklemmen des Verbundwerkstoffes 20 umfassen. Weiterhin kann die Einrichtung 41, 91 zum Erzeugen des Risses und/oder die Einrichtung 51, 61, 71, 81, 91 zum Vergrößern des Risses zumindest eine Stützeinheit 43 zum Abstützen des Verbundwerkstoffes 20 umfassen. Ferner kann die Einrichtung 41, 91 zum Erzeugen des Risses und/oder die Einrichtung 51, 61, 71, 81, 91 zum Vergrößern des Risses zumindest eine Saugeinheit 52 zum Ansaugen des Verbundwerkstoffes 20 mittels über die Saugeinheit 52 erzeugten Unterdrucks. Die Einrichtung 41, 91 zum Erzeugen des Risses und/oder die Einrichtung 51, 61, 71, 81, 91 zum Vergrößern des Risses kann weiterhin zumindest einen Keil 82 umfassen. Die Einrichtung 41, 91 zum Erzeugen des Risses und/oder die Einrichtung 51, 61, 71, 81, 91 zum Vergrößern des Risses kann ferner zumindest eine Krümmungskontrolleinheit 72 zum Kontrollieren einer Krümmung des Verbundwerkstoffes 20. Hierbei kann die Krümmungskontrolleinheit 72 in Form einer Rolle ausgebildet sein. Weiterhin kann die Einrichtung 41, 91 zum Erzeugen des Risses und/oder die Einrichtung 51, 61, 71, 81, 91 zum Vergrößern des Risses zumindest einen Gegenstand 44 zum Einbringen der Krafteinwirkung, umfassen. Hierdurch kann es ermöglicht werden, den Riss schnell und zuverlässig zu erzeugen 12 und/oder zu vergrößern 13.

Fig. 5 zeigt eine schematische Darstellung eines Ausführungsbeispiels einer Vorrichtung 50 zum Recyclen eines mehrere Lagen 21 umfassenden Verbundwerkstoffs 20. Die Vorrichtung 50 kann eine Einrichtung 51 zum Vergrößern des Risses umfassen. Diese Einrichtung 51 kann eine Klemmeinheit 42 umfassen, die beispielsweise zwei Lagen 21 von vier Lagen 21 des Verbundwerkstoffs 20 an einer Seite (hier: links) einklemmen kann. Weiterhin kann die Einrichtung 51 eine Stützeinheit 43, die zwei Stützen 43a, 43b umfassen kann, und drei Saugeinheiten 52 oder Saugsysteme umfassen. Die Stützeinheit 43 und die drei Saugeinheiten 52 können unterhalb des Verbundwerkstoffs 20 angeordnet werden. Die Klemmeinheit 42 kann bewegbar ausgebildet sein und kann mit der eingeklemmten Seite des Verbundwerkstoffs 20 von den Saugeinheiten 52 wegbewegt werden, um eine (Scher-) Krafteinwirkung 45 auf den Verbundwerkstoff 20 auszuüben und so beispielsweise zwei Lagen 21 von den verbleibenden Lagen 21 des Verbundwerkstoffs 20 ablösen zu können.

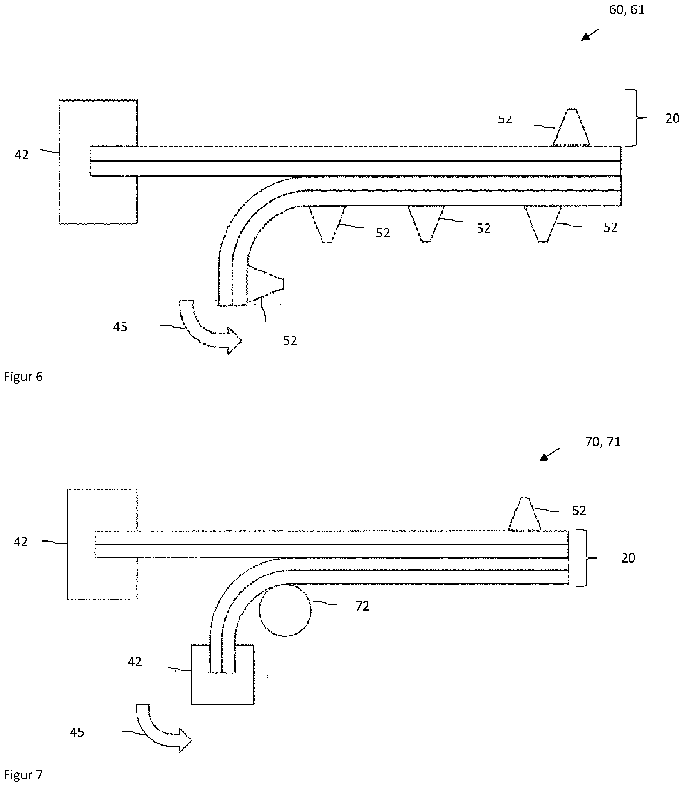

Fig. 6 zeigt eine schematische Darstellung eines Ausführungsbeispiels einer Vorrichtung 60 zum Recyclen eines mehrere Lagen 21 umfassenden Verbundwerkstoffs 20. Die Vorrichtung 60 kann eine Einrichtung 61 zum Vergrößern des Risses umfassen. Diese Einrichtung 61 kann fünf Saugeinheiten 52 und eine Klemmeinheit 42 umfassen. Die Klemmeinheit 42 kann beispielsweise zwei Lagen 21 von vier Lagen 21 des Verbundwerkstoffs 20 an einer Seite einklemmen. Vier Saugeinheiten 52 können unterhalb des Verbundwerkstoffs 20 angeordnet sein. Eine Saugeinheit 52 kann oberhalb des Verbundwerkstoffs 20 angeordnet sein, angrenzend an die obere, von der Klemmeinheit 42 eingeklemmten, Lagen 21 des Verbundwerkstoffs 20. Eine Krümmung zweier unterer Lagen 21 des Verbundwerkstoffs 20 kann durch eine der unterhalb des Verbundwerkstoffs 20 angeordneten Saugeinheit 52 erzeugt werden. Diese Saugeinheit 52 kann nächstliegend zu der Klemmeinheit 42 und winklig, insbesondere mit einem Winkel von 90°, zu den anderen drei unterhalb des Verbundwerkstoffs 20 angeordneten Saugeinheiten 52 angeordnet werden.

Fig. 7 zeigt eine schematische Darstellung eines Ausführungsbeispiels einer Vorrichtung 70 zum Recyclen eines mehrere Lagen 21 umfassenden Verbundwerkstoffs 20. Die Vorrichtung 70 kann eine Einrichtung 71 zum Vergrößern des Risses umfassen. Diese Einrichtung 71 kann zwei Klemmeinheiten 42, eine Saugeinheit 52 und eine Krümmungskontrolleinheit 72 zum Kontrollieren einer Krümmung des Verbundwerkstoffes 20, die als Rolle ausgebildet sein kann, umfassen. Der Verbundwerkstoff 20 kann vier Lagen 21 umfassen, die in jeweils zwei Lagen 21 getrennt werden können. Hierzu können zwei obere Lagen 21 des Verbundwerkstoffs 20 an ihren Ende in einer Klemmeinheit 42 eingeklemmt werden. Zwei untere Lagen 21 des Verbundwerkstoffs 20 können an ihrem Ende in einer weiteren Klemmeinheit 42 eingeklemmt werden. An einem den Klemmeinheiten 42 gegenüberliegenden Ende des Verbundwerkstoffs 20 kann oberhalb des Verbundwerkstoffs 20 eine Saugeinheit 52 angeordnet werden. Außerdem kann unterhalb des Verbundwerkstoff 20 und nächstliegend zu der weiteren Klemmeinheit 42 die Rolle 72 angeordnet werden. Die weitere Klemmeinheit 42 kann bewegbar ausgebildet sein und wird von dem Verbundwerkstoff 20 wegbewegt, um so eine Kraftwirkung 45 auf den Verbundwerkstoff 20 auszuüben und auf diese Weise die Lagen 21 des Verbundwerkstoffs 20 von anderen Lagen 21 des Verbundwerkstoffs 20 zu separieren. Mittels der Rolle 72 kann hierbei eine Lagenkrümmung der unteren beiden Lagen 21 des Verbundwerkstoffs 20 kontrolliert werden.

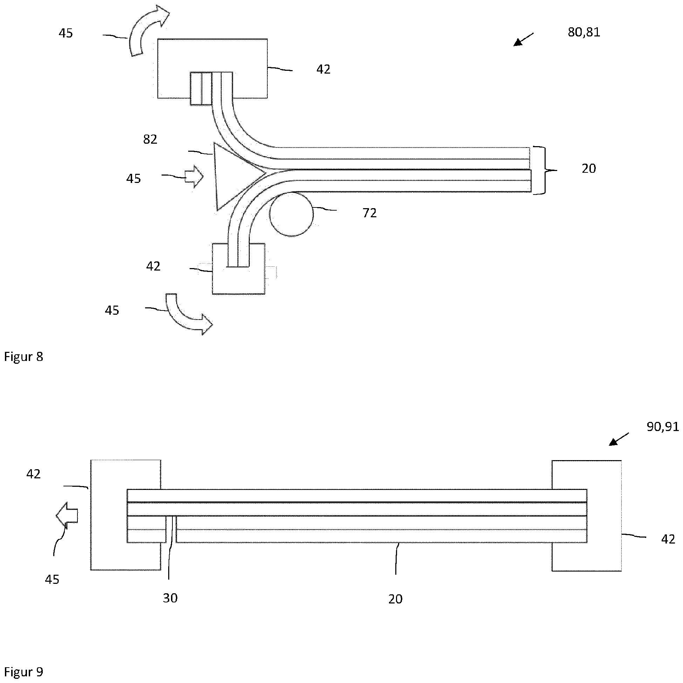

Fig. 8 zeigt eine schematische Darstellung eines Ausführungsbeispiels einer Vorrichtung 80 zum Recyclen eines mehrere Lagen 21 umfassenden Verbundwerkstoffs 20. Die Vorrichtung 80 kann eine Einrichtung 81 zum Vergrößern des Risses umfassen. Diese Einrichtung 81 kann zwei bewegbare Klemmeinheiten 42, eine Krümmungskontrolleinheit 72 zum Kontrollieren einer Krümmung des Verbundwerkstoffs 20, die als Rolle ausgebildet ist, und einen Keil 82 umfassen. Der Verbundwerkstoff 20 kann beispielsweise vier Lagen 21 umfassen, die beispielsweise in jeweils zwei Lagen 21 getrennt werden können. Die oberen beiden Lagen 21 des Verbundwerkstoffs 20 können an ihren Ende in einer Klemmeinheit 45 eingeklemmt werden. Die unteren beiden Lagen 21 des Verbundwerkstoffs 20 können an ihren Ende in einer weiteren Klemmeinheit 42 eingeklemmt werden. Der Keil 82 kann wird in den Riss eingebracht werden, um diesen zu vergrößern, wenn die Klemmeinheit 42 und die weitere Klemmeinheit 42 von dem Verbundwerkstoff 20 wegbewegt werden und somit eine Krafteinwirkung 45 auf den Verbundwerkstoff 20 ausgeübt wird. Um die Krümmung der unteren beiden sich ablösenden Lagen 21 des Verbundwerkstoffs 20 kontrollieren zu können, kann unterhalb des Verbundwerkstoffs 20 die Rolle angeordnet sein.

In Fig. 9 ist eine schematische Darstellung einer Vorrichtung 90 zum Recyclen eines mehrere Lagen umfassenden Verbundwerkstoffes 20 gezeigt. Fig. 9 zeigt eine schematische Darstellung eines Ausführungsbeispiel einer Vorrichtung 90, die für die Realisierung der Etappe 2 und 3 in einem Schritt, das Erzeugen und das Vergrößern des Risses, eingesetzt werden kann. Die Vorrichtung 90 umfasst eine Einrichtung 91 zum Erzeugen des Risses und zum Vergrößern des Risses. Die Einrichtung 91 kann zwei Klemmeinheiten 42 oder Greifsysteme umfassen. Die Klemmeinheiten 42 können alle vier Lagen des Verbundwerkstoffs 20 an zwei gegenüberliegenden Seiten des Verbundwerkstoffs 20 in Etappe 2 einklemmen. Eine der Klemmeinheiten 42 kann bewegbar ausgebildet sein und bewegt werden, um eine Kraftwirkung 45 auf den Verbundwerkstoff 20 auszuüben, um einen Riss in dem Verbundwerkstoff 20 zu erzeugen und zu verbreiten und/oder zu vergrößern.

Ein mit dem vorliegenden Verfahren 10 durch eine mechanische Lagentrennung recycelter Verbundwerkstoff 20 kann Lagen 21 aufweisen, die beispielsweise für die Herstellung von thermoplastischen Composites imprägniert sind (mit polymer befüllt sind), sichtbar nicht ganz eingebettete Fasern und/oder teilweise gebrochene Fasern an der Oberfläche aufweisen. Außerdem kann die Rauheit der Oberfläche eines Verbundwerkstoffs 20 deutlich ein Webmuster aufweist. Durch das Recyclingverfahren rückgewonnen Lagen 21 können eine relativ kleine Größe im Vergleich zu neu produziertem Verbundwerkstoff 20 aufweisen, da sie aus einem Verschnitt stammen können.

Im vorliegenden Verfahren 10 werden keine Verbundwerkstoffe recycelt, die in denen extra-Elemente wie Griffe an der Probe gebunden sind, um eine Lagentrennung zu realisieren so wie es beispielsweise im double Cantilever beam Versuch der Fall ist. Die Benutzung von solchen Elementen kann als zu aufwendig für eine Anwendung in einem Recyclingverfahren eingeschätzt werden. Das vorliegende Verfahren deckt auch keine Composites ab, in denen Komponenten extra für das End-of-Life Recycling eingebettet sind (weder chemische additive noch mechanische Trennsysteme). Das vorliegende Verfahren kann sich auf klassische Organobleche, die beispielsweise nur aus Faser und Matrix bestehen, fokussieren. Organobleche sind Faserverbundwerkstoffe, die häufig im Automobil- und Flugzeugbau eingesetzt werden können. Organobleche können Faser-Matrix-Halbzeuge sein. Sie können ein Fasergewebe oder ein Fasergelege umfassen, die in eine thermoplastische Kunststoffmatrix eingebettet sein können. Die Vorteile einer thermoplastischen Matrix können in der Warmumformfähigkeit der Halbzeuge und den daraus resultierenden kürzeren Prozesszeiten im Vergleich zu konventionellen duroplastischen Faserverbundwerkstoffen liegen. Dies kann besonders in der Automobilindustrie mit ihren kurzen Prozesszeiten von hohem Interesse sein. Häufig verwendete Faserwerkstoffe können Glas, Aramid und Kohlenstoff (Carbon) sein. Bei Geweben und Gelegen können die Fasern auch rechtwinklig zueinander verlaufen, so dass die mechanischen Eigenschaften von Organoblech wie Steifigkeit, Festigkeit und Wärmeausdehnung gut definiert werden können. Organobleche können beispielsweise für die Herstellung von unterschiedlichen Automobilbauteilen beispielsweise für Türmodule verwendet werden. Die Organobleche können Vorteile haben, die deren Weiternutzung unterstützen. Sie können beispielsweise die Möglichkeit bieten, mit kurzen Taktzeiten zu Bauteilen verarbeitet zu werden und sie können Gewichtsersparungen ermöglichen. Die Gewichtseinsparungen können beispielsweise in einem Fall von einer Türverkleidung bei 1,6 kg pro Tür im Vergleich zu einer Stahllösung liegen. In dem globalen Kontext der vorgeschriebenen Reduzierung der Fahrzeugmassen können Organobleche als relevante Lösungen erscheinen. Thermoplastischen Composites und die darunterfallenden langfaserverstärkten Kunststoffe zu denen die Organobleche zählen können eine hohe Wachstumsrate haben. Organoblech werden heute schon massiv eingesetzt und können in der Zukunft noch stärker eingesetzt werden. Das Recycling von End-of-Life Bauteile kann ebenfalls ein sehr großer Markt sein. Die Marktgröße von den recycelten Carbonfasern (andere Composites mit andere Fasertypen werden dabei nicht berücksichtigt) kann derzeit schon sehr groß sein.

Die Benutzung von extra-Elementen oder Komponenten für das End-of-Life Recycling kann als zu aufwendig und zu teuer für die Herstellung von Organoblechbauteilen eingeschätzt werden. Das vorliegende Verfahren bezieht sich ebenfalls nicht auf eine direkte Wiederverwendung von dem zu recycelnden thermoplastischen Composite durch Erhitzen und Umformen, da dies keine Flexibilität bezüglich einer Auslegung des Recyclingmaterials für eine weitere Nutzung bietet kann.

Das vorliegende Verfahren 10 kann sich insbesondere auf Organobleche beziehen und kann somit deren -Hersteller und -Verarbeiter betreffen. Organobleche können thermoplastische Composite-Halbzeuge sein, die als Platten verkauft werden können. Diese können umgeformt und mit einem thermoplastischen Kunststoff überspritzt werden. Die Organobleche können sowohl in der Automobilbranche als auch in die Luftfahrt aber auch für Konsumgüter wie beispielsweise Handys und Schuhe eingesetzt werden. Platten aus Organoblech können erstmal je nach Zielbauteil zugeschnitten werden. Diese Etappe kann Verschnitt verursachen. Die Lagentrennung gemäß dem vorliegenden Verfahren könnte erlauben, aus diesem Verschnitt Lagen 21, für die lokale Verstärkung von Bauteilen oder für die Herstellung von kleineren Bauteilen, zurückzugewinnen. Diese rückgewonnenen Lagen 21 können aus demselben Material wie die Ausgangsorganobleche bestehen und somit einen ökonomischen Wert besitzen. Die rückgewonnenen Lagen könnten somit kurzfristig und mit den heutzutage verwendeten Werkstoffen eine neue Einkommensquelle für die Organoblechhersteller werden. Zusätzlich könnte durch die Möglichkeit für die Bauteilhersteller den Verschnitt als lokale Verstärkung zu verwerten, der Preis der Bauteile reduziert werden. Somit könnte das vorliegende Verfahren von Organoblechherstellern eingesetzt werden. Eine weitere Anwendung des vorliegenden Verfahrens kann das Recycling von End-of-Life Bauteilen sowie von Verschnittmaterial sein. Die mit dem vorliegenden Verfahren 20 rückgewonnenen Lagen 21 könnten für die Produktion von neuen Bauteilen eingesetzt werden.

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die folgenden Ansprüche werden hiermit in die detaillierte Beschreibung aufgenommen, wobei jeder Anspruch als getrenntes Beispiel für sich stehen kann. Ferner ist zu beachten, dass - obwohl ein abhängiger Anspruch sich in den Ansprüchen auf eine bestimmte Kombination mit einem oder mehreren anderen Ansprüchen bezieht - andere Beispiele auch eine Kombination des abhängigen Anspruchs mit dem Gegenstand jedes anderen abhängigen oder unabhängigen Anspruchs umfassen können. Solche Kombinationen werden hiermit explizit vorgeschlagen, sofern nicht im Einzelfall angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt als abhängig von diesem anderen unabhängigen Anspruch definiert ist.

## Patentansprüche

1. Ein Verfahren zum Recyclen eines mehrere Lagen umfassenden Verbundwerkstoffes, umfassend:
Erzeugen zumindest einer Rissinitiierungsstelle an einer Oberfläche des Verbundwerkstoffes, wobei eine Tiefe der Rissinitiierungsstelle wenigstens eine Lage umfasst; und
Erzeugen eines Risses zwischen zwei Lagen des Verbundwerkstoffes ausgehend von der Rissinitiierungsstelle; und
Vergrößern des Risses mittels einer Krafteinwirkung, um zumindest eine Lage des Verbundwerkstoffes von anderen Lagen des Verbundwerkstoffes zu separieren.

2. Das Verfahren gemäß Anspruch 1, wobei die Tiefe der Rissinitiierungsstelle mehrere Lagen des Verbundwerkstoffes umfasst.

3. Das Verfahren gemäß einem der vorhergehenden Ansprüche, wobei die Rissinitiierungsstelle durch Fräsen oder Sägen erzeugt wird.

4. Das Verfahren gemäß einem der vorhergehenden Ansprüche, wobei die Rissinitiierungsstelle als Kerbe, Nut oder Rille ausgebildet ist.

5. Das Verfahren gemäß einem der vorhergehenden Ansprüche, wobei mehrere Rissinitiierungsstellen erzeugt werden.

6. Das Verfahren gemäß einem der vorhergehenden Ansprüche, wobei der Riss und/oder das Vergrößern des Risses mittels einer Krafteinwirkung außerhalb einer Erstreckungsebene der Lagen des Verbundwerkstoffes und/oder Scherkräften erzeugt wird.

7. Das Verfahren gemäß einem der vorhergehenden Ansprüche, wobei der Riss und/oder das Vergrößern des Risses durch eine quasi-statische oder dynamische Krafteinwirkung erzeugt wird.

8. Das Verfahren gemäß einem der vorhergehenden Ansprüche, wobei der Riss mittels Einklemmens des Verbundwerkstoffes; mittels Abstützens des Verbundwerkstoffes; und/oder mittels Ansaugens des Verbundwerkstoffes, erzeugt und/oder vergrößert wird.

9. Das Verfahren gemäß einem der vorhergehenden Ansprüche, wobei ein Faserverbundwerkstoff als Verbundwerkstoff verwendet wird.

10. Eine Vorrichtung zum Recyclen eines mehrere Lagen umfassenden Verbundwerkstoffes, umfassend
eine Einrichtung zum Erzeugen eines Risses zwischen zwei Lagen des Verbundwerkstoffes ausgehend von zumindest einer Rissinitiierungsstelle.

11. Die Vorrichtung gemäß Anspruch 10, wobei die Vorrichtung weiterhin eine Einrichtung zum Vergrößern des Risses mittels einer Krafteinwirkung umfasst, um damit zwei Lagen des Verbundwerkstoffes voneinander zu separieren.

12. Die Vorrichtung gemäß einem der Ansprüche 10 oder 11, wobei die Einrichtung zum Erzeugen des Risses und/oder die Einrichtung zum Vergrößern des Risses zumindest eine Klemmeinheit zum Einklemmen des Verbundwerkstoffes; zumindest eine Stützeinheit zum Abstützen des Verbundwerkstoffes; zumindest eine Saugeinheit zum Ansaugen des Verbundwerkstoffes; zumindest einen Keil; zumindest eine Krümmungskontrolleinheit zum Kontrollieren einer Krümmung des Verbundwerkstoffes und/oder zumindest einen Gegenstand zum Einbringen der Krafteinwirkung, umfasst.

13. Die Vorrichtung gemäß Anspruch 12, wobei die Krümmungskontrolleinheit in Form einer Rolle ausgebildet ist.
